# EUROPEAN PATENT SPECIFICATION

(11) **EP 3 132 929 B1**
(45) Date of publication and mention of the grant of the patent: **04.11.2020**
(21) Application number: 15774010.1
(22) Date of filing: 27.03.2015
(51) Int. Cl.: C09D 183/02, C09D 183/04, C03C 17/34, B32B 9/00

(54) **ANTI-FOGGING ARTICLE AND MANUFACTURING METHOD THEREOF**
ANTIBESCHLAGARTIKEL UND HERSTELLUNGSVERFAHREN DAFÜR
ARTICLE ANTI-BROUILLARD ET SON PROCÉDÉ DE FABRICATION

(30) Priority: 01.04.2014 JP 2014075761
(43) Date of publication of application: 22.02.2017
(73) Proprietor: AGC Inc., Tokyo 100-8405 (JP)
(72) Inventor: KODAIRA Hirokazu, Tokyo 100-8405 (JP); SUGIHARA Yosuke, Tokyo 100-8405 (JP); MORI Yusuke, Tokyo 100-8405 (JP); YONEDA Takashige, Tokyo 100-8405 (JP)
(74) Representative: Müller-Boré & Partner Patentanwälte PartG mbB
(86) International application number: PCT/JP2015/059623
(87) International publication number: WO 2015/152049

(56) References cited:
- WO-A1-2011/004873
- WO-A1-2011/004873
- WO-A1-2012/141150
- JP-A- 2003 040 651
- JP-A- 2006 035 592

## Description

The present invention relates to an antifogging article and a manufacturing method thereof.

Regarding a transparent substrate such as glass or plastic, when a substrate surface is at a temperature of dew-point or lower, minute water droplets adhere to the surface to scatter transmitted light, which impairs transparency, resulting in a so-called "fogging" state. As means for preventing fogging, various proposals have been made hitherto.

In Patent Reference 1, there is proposed an antifogging article having a substrate and a water-absorbing cross-linked resin layer provided on a surface of the substrate, the antifogging article being characterized in that the water-absorbing cross-linked resin is a cross-linked resin whose saturated water absorption amount is 45 mg/cm³ or more. The water-absorbing cross-linked resin (antifogging layer) mentioned in Patent Reference 1 expresses antifogging performance by absorbing (absorbing moisture) minute water droplets which adhere to the substrate surface.

Patent Reference 1: International Publication WO 2007/052710

The water-absorbing cross-linked resin layer (antifogging layer) mentioned in Patent Reference 1 is excellent in an antifogging property, while it is found that there is room for improvement in abrasion resistance as a result of studies made by the present inventors.

Document WO 2011/004873 discloses an antifogging article which comprises a substrate, a water-absorbing resin layer and an antifogging layer comprising 35 parts by weight of an alkoxysilane and silica.

A subject of the present invention is to solve the above-described conventional problems and provide an antifogging article excellent in both the antifogging property and the abrasion resistance and a manufacturing method thereof.

The present invention is constituted as follows.
The present invention relates to an antifogging article including: a substrate; a water-absorbing resin layer disposed on the substrate; and an overcoat layer disposed on the water-absorbing resin layer and including: a hydrolyzed condensate of an alkoxysilane compound; and silica particles, wherein a film thickness of the overcoat layer is 20 to 350 nm and the overcoat layer is formed from an overcoat composition containing 90 to 45 parts by mass of the alkoxysilane compound and 10 to 55 parts by mass of the silica particles relative to total 100 parts by mass of the alkoxysilane compound and the silica particles.
The present invention relates to a manufacturing method of an antifogging article, the method including: forming a water-absorbing resin layer on a substrate; forming an overcoat composition layer by applying an overcoat composition containing, 90 to 45 parts by mass of an alkoxysilane compound and 10 to 55 parts by mass of silica particles relative to total 100 parts by mass of the alkoxysilane compound and the silica particles on the water-absorbing resin layer; and forming an overcoat layer by heat-treating the overcoat composition layer.

According to the present invention, it is possible to provide an antifogging article excellent in both an antifogging property and abrasion resistance and a manufacturing method thereof.

A numerical range indicated using "to" in this description indicates a range including the respective numerical values mentioned before and after "to" as a minimum value and a maximum value. Further, when a plurality of substances corresponding to each of components exist in a composition, a content of each of the components in the composition means a total amount of the plurality of substances existing in the composition as long as there is not particular indication.

### [Antifogging article]

An antifogging article is an antifogging article which has: a substrate; a water-absorbing resin layer disposed on the substrate; and an overcoat layer disposed on the water-absorbing resin layer and containing a hydrolyzed condensate of an alkoxysilane compound and silica particles, and in which a film thickness of the overcoat layer is 20 to 350 nm and the overcoat layer is formed from an overcoat composition containing 90 to 45 parts by mass of the alkoxysilane compound and 10 to 55 parts by mass of the silica particles relative to total 100 parts by mass of the alkoxysilane compound and the silica particles.

### (Substrate)

As the substrate, which is not particularly limited, there can be cited glass, plastic, metal, ceramics, and combinations of these (for example, composite material, layered material, and the like). Among them, a light-transmissive substrate selected from a group consisting of glass, plastic, and combinations of these is preferable. A shape of the substrate is not particularly limited, and there can be cited a flat plate shape, a shape in which the whole surface or a part thereof has a curvature, and the like. A thickness of the substrate is not particularly limited, and it can be appropriately selected depending on application of the antifogging article. The thickness of the substrate is preferably 1 to 10 mm.

### (Water-absorbing resin layer)

The water-absorbing resin layer is a cured product of a resin composition disposed on the substrate. The antifogging article has the water-absorbing resin layer, thereby being given sufficient water absorbing ability for expressing an antifogging property. Note that the water-absorbing resin layer may be disposed in at least a part of a region on the substrate, is preferably disposed at an area rate of 75% or more to a total area of at least one main surface of the substrate, and is particularly preferably disposed over the whole surface of at least one main surface of the substrate.

The water-absorbing resin layer is not particularly limited as long as it is the cured product of the resin composition containing a water-soluble resin. The water-absorbing resin layer can be formed using a conventionally well-known crosslinkable resin which allows forming of the layer, for example, a crosslinkable resin and the like mentioned in International Publication WO 2007/052710. Here, water solubility in the water-soluble resin means that a dissolution rate (hereinafter, also referred to as "water-soluble rate") when 10 parts by mass of the resin is mixed relative to 90 parts by mass of water (ion-exchange water) at a room temperature (25°C) is 20% or more. Further, an insoluble resin means a resin having the water-soluble rate of less than 20%.

The water-absorbing resin layer is specifically formed from a water-absorbing resin layer forming composition (hereinafter, also referred to as "undercoat composition") containing the water-soluble resin and a curing catalyst. Hereinafter, components contained in the undercoat composition will be described. Note that in this description, curable resins which form the water-absorbing resin layer, such as the water-soluble resin and the later-described water-insoluble resin are sometimes collectively referred to as "resin component".

### <Water-soluble resin>

The water-soluble resin is not particularly limited as long as the cured product of the water-soluble resin has a water absorbing property. As the water-soluble resin, there can be cited a conventionally well-known water-soluble resin whose cured product has the water absorbing property, for example, a crosslinkable component mentioned in International Publication WO 2007/052710. The water-soluble rate of the water-soluble resin is preferably 50% or more, more preferably 90% or more, and particularly preferably 98% or more.

As long as the water-soluble resin has one or more functional groups (hereinafter, also referred to as "curable group"), each of which is capable of a curing reaction independently, or which is capable of the curing reaction with the later-described water-insoluble resin, under existence of the later-described curing catalyst, the water-soluble resin is not particularly limited. The water-soluble resin may be a monomer, and may be an oligomer or a polymer in which at least a part of the resin component has reacted. As the curable group, which is not particularly limited, there can be cited a vinyl group, an epoxy group, a styryl group, an acryloyloxy group, a methacryloyloxy group, an amino group, an ureido group, a chloro group, a thiol group, a sulfide group, a hydroxy group, a carboxy group, an acid anhydride group, and the like. The curable group is preferably the carboxy group, the epoxy group, and the hydroxy group and more preferably the epoxy group. The number of the curable groups can be appropriately selected according to a purpose or the like. The water-soluble resin may be independently one kind or a combination of two or more kinds.

When the water-soluble resin is the monomer or the oligomer having the curable group, the number of the curable groups contained in one molecule is preferably two or more, more preferably two to ten, and particularly preferably three to seven. Further, the combination of one or more kinds of the water-soluble resins having one curable group and the water-soluble resin having two or more curable groups may be used. In this case, it is preferable that the average number of the curable groups per one molecule is set to 1.5 or more regarding the combination of the water-soluble resins.

The water-soluble resin is preferably a water-soluble epoxy resin having the epoxy group as the curable group. The water-soluble epoxy resin is not particularly limited as long as it is a resin having one or more epoxy groups in one molecule, and there can be cited an aliphatic epoxy resin, an alicyclic epoxy resin, an aromatic epoxy resin, and so on. The aliphatic epoxy resin is an epoxy resin in which at least one of the epoxy group and a glycidoxy group bonds to an aliphatic group (alkyl group, alkyleneoxy group, alkylene group, and the like). The aromatic epoxy resin is an epoxy resin in which at least one of the epoxy group and the glycidoxy group bonds to an aromatic group (phenyl group, phenylene group, and the like). The alicyclic epoxy resin is an epoxy resin which has an alicyclic group (cyclohexyl group and the like) in a molecule and has at least one epoxy group to be formed by carbon-carbon bonding which forms an alicycle. The water-soluble resin is preferably the aliphatic epoxy resin. When the water-soluble resin is the aliphatic epoxy resin, the water-soluble rate is higher and the antifogging property of the water-absorbing resin layer to be obtained tends to be higher.

The aliphatic epoxy resin is preferably a compound having a glycidyl group and more preferably a glycidyl ether compound. The glycidyl ether compound can be obtained by glycidyl-etherifying an alcohol compound. The glycidyl ether compound is preferably a glycidyl ether compound of the alcohol compound with two or more functional groups and more preferably a glycidyl ether compound of the alcohol compound with three or more functional groups. The alcohol compound may be any of straight-chained or branched-chained aliphatic alcohol, alicyclic alcohol, sugar alcohol, and so on. Further, at least a part of continuous carbon chains contained in the alcohol compound may be interrupted by an oxygen atom or the like, and a substituent such as a hydroxy group, the carboxy group, the amino group, or the aromatic group such as the phenyl group may be further held.

As specific examples of the water-soluble epoxy resin, there can be cited monofunctional epoxy resins such as phenoxy poly (ethyleneoxy) glycidyl ether and lauryloxy poly (ethyleneoxy) glycidyl ether; polyfunctional epoxy resins such as ethylene glycol diglycidyl ether, polyethylene glycol diglycidyl ether, propylene glycol diglycidyl ether, polypropylene glycol diglycidyl ether, neopentyl glycol diglycidyl ether, glycerol polyglycidyl ether, diglycerol polyglycidyl ether, polyglycerol polyglycidyl ether, trimethylolpropane polyglycidyl ether, sorbitol polyglycidyl ether, pentaerythritol polyglycidyl ether; and so on. Note that in the above-described specific examples, "poly" means more than one on average and is preferably more than two. One kind of these water-soluble epoxy resins may be used independently, or two or more kinds of them may be used in combination.

An epoxy equivalent of the water-soluble epoxy resin is not particularly limited and is preferably 100 to 1,000 and preferably 130 to 250. When the epoxy equivalent is 100 to 1,000, there is a tendency to improve the antifogging property of the water-absorbing resin layer more. The epoxy equivalent can be found by dividing weight-average molecular weight of the epoxy resin by the average number of epoxy groups per one molecule.

When the water-soluble epoxy resin is the oligomer or the polymer, its molecular weight is not particularly limited and is preferably 200 to 50,000, more preferably 300 to 10,000, and particularly preferably 500 to 5,000 in weight-average molecular weight. When the weight-average molecular weight is 200 to 50,000, there is a tendency to improve the antifogging property of the water-absorbing resin layer more. In this description, the weight-average molecular weight (Mw) is molecular weight in terms of polystyrene by gel permeation chromatography (GPC).

As commercial products of the water-soluble epoxy resin, for example, there can be cited aliphatic polyglycidyl ether (Denacol EX-1610 manufactured by Nagase ChemteX Corporation, and the like), glycerol polyglycidyl ether (Denacol EX-313 manufactured by Nagase ChemteX Corporation, and the like), polyglycerol polyglycidyl ether (Denacol EX-512 and EX-521 manufactured by Nagase ChemteX Corporation, and the like), sorbitol polyglycidyl ether (Denacol EX-614B manufactured by Nagase ChemteX Corporation, and the like), ethylene glycol diglycidyl ether (Denacol EX-810 and EX-811 manufactured by Nagase ChemteX Corporation, and the like), diethylene glycol diglycidyl ether (Denacol EX-850and EX-851 manufactured by Nagase ChemteX Corporation, and the like), polyethylene glycol diglycidyl ether (Denacol EX-821, EX-830, EX-832, EX-841, and EX-861 manufactured by Nagase ChemteX Corporation), polypropylene glycol diglycidyl ether (Denacol EX-920 manufactured by Nagase ChemteX Corporation, and the like), phenoxy (ethyleneoxy)₅glycidyl ether (Denacol EX-145 manufactured by Nagase ChemteX Corporation), lauryloxy (ethyleneoxy)₁₅glycidyl ether (Denacol EX-171 manufactured by Nagase ChemteX Corporation), and the like. In the above, the numbers behind (ethyleneoxy) indicate the number of repetitions of an ethyleneoxy group.

### <Water-insoluble resin>

The undercoat composition may contain the water-insoluble resin in addition to the water-soluble resin. By the undercoat composition containing the water-insoluble resin, an expansion ratio of the water-absorbing resin layer can be decreased and excessive expansion of the water-absorbing resin layer at a time of absorbing moisture is suppressed. This allows the water-absorbing resin layer excellent in water resistance to be obtained.

The kind of the water-insoluble resin layer is not particularly limited as long as the water-insoluble resin has one or more curable groups similarly to the water-soluble resin, and any of a monomer, an oligomer, or a polymer is available. The curable group is as described above in the water-soluble resin, including preferable ones. The number of the curable groups can be appropriately selected according to a purpose and the like. The water-insoluble resin may be independently one kind or a combination of two or more kinds.

The water-insoluble resin may be the monomer or the oligomer having the curable group similarly to the water-soluble resin. Further, the combination of one or more kinds of the water-insoluble resins having one curable group and the water-insoluble resin having two or more curable groups may be used. In this case, it is preferable that the average number of the curable groups per one molecule is set to 1.5 or more regarding the combination of the water-insoluble resins.

The water-insoluble resin is preferably a water-insoluble epoxy resin, more preferably the aliphatic epoxy resin and the aromatic epoxy resin, further preferably the aromatic epoxy resin, and particularly preferably a polyfunctional aromatic epoxy resin. When the water-insoluble resin is the aromatic epoxy resin, a water-soluble rate is low and the expansion rate of the water-absorbing resin layer tends to decrease more owing to existence of an aromatic ring. Accordingly, when the undercoat composition contains the aromatic epoxy resin as the water-insoluble resin, the water-absorbing resin layer has more excellent adhesiveness to the overcoat layer and the substrate. Further, when the water-insoluble resin is the polyfunctional aromatic epoxy resin, reactivity improves more and therefore there is a tendency of more improvement in the adhesiveness of the water-absorbing resin layer to be formed to the overcoat layer and the substrate.

An epoxy equivalent of the water-insoluble epoxy resin is not particularly limited and is preferably 100 to 1,000 and more preferably 130 to 500. When the epoxy equivalent is 100 to 1,000, there is a tendency to improve the adhesiveness of the water-absorbing resin layer to the overcoat layer and the substrate more. When the water-insoluble epoxy resin is the oligomer or the polymer, its molecular weight is not particularly limited and is preferably 300 to 50,000, more preferably 500 to 10,000, and particularly preferably 800 to 5,000 in weight-average molecular weight. When the weight-average molecular weight is 300 to 50,000, the adhesiveness of the water-absorbing resin layer to the overcoat layer and the substrate tends to be good.

As water-insoluble aromatic epoxy resins, specifically there can be cited, as monofunctional aromatic epoxy resins, phenyl glycidyl ether (Denacol EX-141 manufactured by Nagase ChemteX Corporation, and the like) and p-t-butylphenyl glycidyl ether (Denacol EX-145 manufactured by Nagase ChemteX Corporation, and the like), and there can be cited, as polyfunctional aromatic epoxy resins, resorcinol diglycidyl ether (Denacol EX-201 manufactured by Nagase ChemteX Corporation, and the like) and bisphenol A diglycidyl ether (EP4100 manufactured by ADEKA CORPORATION, and the like).

As water-insoluble aliphatic epoxy resins, for example, there can be cited allyl glycidyl ether (Denacol EX-111 manufactured by Nagase ChemteX Corporation, and the like), 2-ethylhexyl glycidyl ether (Denacol EX-121 manufactured by Nagase ChemteX Corporation, and the like), sorbitol polyglycidyl ether (Denacol EX-622 manufactured by Nagase ChemteX Corporation, and the like), polypropylene glycol diglycidyl ether (Denacol EX-931 (about 11 moles of a propylene oxide unit) manufactured by Nagase ChemteX Corporation, and the like), neopentyl glycol diglycidyl ether (Denacol EX-211 manufactured by Nagase ChemteX Corporation, and the like), 1,6-hexanediol diglycidyl ether (Denacol EX-212 manufactured by Nagase ChemteX Corporation, and the like), hydrogenated bisphenol A diglycidyl ether (Denacol EX-252 manufactured by Nagase ChemteX Corporation, and the like), and pentaerythritol polyglycidyl ether (Denacol EX-411 manufactured by Nagase ChemteX Corporation, and the like).

Incidentally, as the cured products of the water-soluble resin and the optional water-insoluble resin besides the above-described epoxy resin, there can be cited: a starch-based resin such as a composite of a starch-acrylonitrile graft polymer hydrolysate, a starch-acrylic acid graft polymer and the like; a cellulose-based resin such as a cellulose-acrylonitrile graft polymer or a cross-linked body of carboxymethyl cellulose; a polyvinyl alcohol-based resin such as a polyvinyl alcohol cross-linked polymer; an acrylic resin such as a sodium polyacrylate cross-linked body or a polyacrylic ester cross-linked body; a polyether-based resin such as a polyethylene glycol diacrylate cross-linked polymer or a polyalkylene oxide-polycarboxylic acid cross-linked body; cross-linked polyurethane which is a reaction product of polyisocyanate with polyether polyol and/or polyester polyol; and the like.

When the cured product of the undercoat composition containing the water-soluble resin and the optional water-insoluble resin besides the epoxy resin forms the water-absorbing resin layer, the undercoat composition containing a raw material curable resin of the above-described cured product and the curing catalyst is used, for example.

When the undercoat composition contains the water-insoluble resin, a content of the water-insoluble resin can be appropriately selected according to a purpose. In the above case, the content of the water-soluble resin is not particularly limited and is preferably 10 to 95 parts by mass, more preferably 30 to 95 parts by mass, and particularly preferably 50 to 90 parts by mass relative to total 100 parts by mass of the water-soluble resin and the water-insoluble resin. Relative to the total 100 parts by mass of the water-soluble resin and the water-insoluble resin, when the water-soluble resin is 10 parts by mass or more, there is a tendency to improve the antifogging property of the water-absorbing resin layer more, and when it is 95 parts by mass or less, there is a tendency of more improvement in the adhesiveness of the water-absorbing resin layer to be formed to the overcoat layer and the substrate.

A content of the resin component in the undercoat composition, as a content in terms of solid content, is preferably 95 to 40 mass% in the composition and more preferably 90 to 60 mass% therein. Note that in the present invention, the content in terms of solid content of a component refers to mass of a residue except a volatile component such as water.

### <Curing catalyst>

The curing catalyst is not particularly limited as long as it is the one which cures the resin component, and it can be appropriately selected according to the kind or the like of resin. The curing catalyst is not particularly limited and there can be cited an aluminum compound, perchlorate, tris(dimethylaminomethyl)phenols, dimethylbenzylamines, phosphines, imidazoles, and the like. When the resin component is the epoxy resin, the curing catalyst is preferably the aluminum compound and perchlorate and more preferably the aluminum compound. When the curing catalyst is the aluminum compound, a curing reaction progress rate is fast, and further there is a tendency to increase hardness of a film.

The aluminum compound is not particularly limited and there can be cited: aluminum alkoxide such as aluminum butoxide, aluminum t-butoxide, aluminum sec-butoxide, aluminum ethoxide, or aluminum isopropoxide; and an aluminum complex such as tris(2,4-pentanedionato)aluminum(III), aluminum hexafluoroacetylacetonate, aluminum trifluoroacetylacetonate, or tris(2,2,6,6-tetramethyl-3,5-heptanedionato)aluminum(III), and the aluminum complex is preferable.

Perchlorate is not particularly limited and there can be cited sodium perchlorate, potassium perchlorate, magnesium perchlorate, ammonium perchlorate, and the like, and ammonium perchlorate is preferable. The curing catalyst may be independently one kind or a combination of two or more kinds.

A content of the curing catalyst is not particularly limited and is preferably 0.1 to 30 parts by mass, more preferably 0.1 to 5 parts by mass, and particularly preferably 0.2 to 3.5 parts by mass relative to 100 parts by mass of the resin component. Relative to 100 parts by mass of the resin component, when the content of the curing catalyst is 0.1 part by mass or more, the water-absorbing resin layer is cured sufficiently, and when it is 30 parts by mass or less, there is a tendency to suppress precipitation of the curing catalyst from the water-absorbing resin layer.

The resin component and the curing catalyst may be each contained independently or may be contained in a form of a pre-polymer of the resin component which has been pre-polymerized under the existence of the curing catalyst. The resin component may be only the water-soluble resin or may be a combination of the water-soluble resin and the water-insoluble resin.

A manufacturing method of the pre-polymer of the resin component is not particularly limited, and the pre-polymer of the resin component can be obtained by mixing the resin component, the curing catalyst, and depending on circumstances a solvent, and reacting. As the solvent, the later-described solvent can be cited and alcohol is preferable.

As amounts of the resin component and the curing catalyst, amounts which satisfy the content of each of the components in the above-described undercoat composition can be cited. Further, an amount of the solvent is not particularly limited, and an amount which is the later-described content of the solvent in the undercoat composition can be cited.

A reaction temperature is not particularly limited as long as it is a temperature at which the resin component can react and the pre-polymer can be obtained, and it is preferably 10 to 100°C and more preferably 70 to 100°C. Reaction time can be appropriately set according to the reaction temperature and is preferably 1 to 240 minutes and more preferably 5 to 180 minutes. When the reaction time is one minute or more, there is a tendency to accelerate curing and decrease an unreacted substance in the water-absorbing resin layer, and when it is 240 minutes or less, there is a tendency to suppress discoloration of the resin.

### <Alkoxysilane compound>

The undercoat composition may contain the alkoxysilane compound. By the undercoat composition containing the alkoxysilane compound, the adhesiveness of the water-absorbing resin layer to be formed and the substrate can be improved. The alkoxysilane compound can be the same as an alkoxysilane compound in the later-described overcoat composition, including a preferable one. Further, the alkoxysilane compound may be a partially hydrolyzed condensate in which at least a part of molecules hydrolyzes and condenses each other. When the undercoat composition contains the partially hydrolyzed condensate of the alkoxysilane compound, there is a tendency of more improvement in the adhesiveness of the water-absorbing resin layer to be formed and the substrate.

A content of the alkoxysilane compound in the undercoat composition is not particularly limited and is preferably 5 to 40 parts by mass and more preferably 8 to 30 parts by mass relative to 100 parts by mass of the resin component Relative to 100 parts by mass of the resin component, as long as the content of the alkoxysilane compound is 5 parts by mass or more, there is a tendency of more improvement in the adhesiveness of the water-absorbing resin layer to be formed and the substrate, and as long as the content thereof is 40 parts by mass or less, there is a tendency of more improvement in antifogging performance of the water-absorbing resin layer. When the undercoat composition contains the partially hydrolyzed condensate of the alkoxysilane compound, a content of the partially hydrolyzed condensate of the alkoxysilane compound is calculated using an amount of a raw material alkoxysilane compound used for obtaining the partially hydrolyzed condensate as an amount of the partially hydrolyzed condensate.

### <Solvent>

The undercoat composition may contain the solvent. By the undercoat composition containing the solvent, there is a tendency to improve coating workability. As long as the solvent has good solubility of components of the resin component and the curing catalyst or the like and is a solvent having low reactivity with respect to these components, it is not particularly limited. As the solvent, there can be cited alcohol (methanol, ethanol, 2-propanol, and the like), ester (acetate (butyl acetate) and the like), ether (diethylene glycol dimethyl ether and the like), ketone (methyl ethyl ketone and the like), water (ion-exchange water and the like), and the like, and ester and alcohol are preferable and alcohol is more preferable. The solvent may be independently one kind or a combination of two or more kinds. Note that at least one of the resin component, the curing catalyst, and the alkoxysilane compound is sometimes used as a mixture of the solvent with each of them independently or a combination of two or more of them. In this case, the solvent contained in the mixture may be used as the solvent in the undercoat composition and another solvent may be used as the solvent in the undercoat composition by adding it further.

A content of the solvent is not particularly limited and is preferably 0.1 to 500 parts by mass and more preferably 1 to 300 parts by mass relative to total 100 parts by mass of the resin component and the curing catalyst. Relative to total 100 parts by mass of the resin component and the curing catalyst, as long as the content of the solvent is 0.1 part by mass or more, there is a tendency to allow suppression of rapid progress of a curing reaction of a component, and as long as it is 500 parts by mass or less, the curing reaction of the component tends to moderately progress.

### <Further component>

The undercoat composition can contain further components in a range where effect of the present invention is exhibited. As such components, there can be cited a curing agent, a filler, a leveling agent, a surfactant, a UV absorbent, a light stabilizer, an antioxidant, and the like.

### <Curing agent>

The undercoat composition may contain a curing agent. The curing agent is a compound which reacts to the resin component and contributes to the curing of the undercoat composition. As long as the curing agent is the compound which has two or more functional groups (hereinafter, also referred to as "reactive group") capable of reacting to the curable group of the resin component and reacts to the resin component, it is not particularly limited. The reactive group can be appropriately selected according to the kind or the like of the curable group of the resin component. As the reactive group, there can be cited a vinyl group, an epoxy group, a styryl group, an acryloyloxy group, a methacryloyloxy group, an amino group, an ureido group, a chloropropyl group, a mercapto group, a sulfide group, an isocyanato group, a hydroxy group, a carboxy group, an acid anhydride group, and the like. For example, when the curable group is the carboxy group, the reactive group is preferably the epoxy group, the amino group, and so on and particularly preferably the epoxy group and the like. When the curable group is the hydroxy group, the reactive group is preferably the epoxy group, the isocyanato group, and so on. When the curable group is the epoxy group, the reactive group is preferably the carboxy group, the amino group, the acid anhydride group, the hydroxy group, and so on.

The number of reactive groups which one molecule of the curing agent has is preferably 1.5 or more on average and more preferably 2 to 8. When the number of reactive groups is 1.5 or more, the water-absorbing resin layer excellent in a balance between the antifogging property and abrasion resistance can be obtained.

As the curing agent, for example, there can be cited a polyamine-based compound, a polycarboxylic acid-based compound (including polycarboxylic acid anhydride), a polyol-based compound, a polyisocyanate-based compound, a polyepoxy-based compound, dicyandiamides, organic acid dihydrazides, and the like. When the resin component is the epoxy resin, as the curing agent there can be cited the polyamine-based compound, the polyol-based compound, the polycarboxylic acid anhydride, and so on, and the polyol-based compound and the polycarboxylic acid anhydride are preferable. When the resin component is a resin having the carboxy group, the curing agent is preferably the polyepoxy-based compound and the polyisocyanate-based compound. The curing agent may be independently one kind or a combination of two or more kinds.

A content of the curing agent is not particularly limited and is preferably 0.1 to 30 parts by mass and more preferably 0.1 to 5 parts by mass relative to 100 parts by mass of the resin component. Relative to 100 parts by mass of the resin component, as long as the content of the curing agent is 0.1 part by mass or more, the curing progresses sufficiently and it is possible to prevent precipitation of the unreacted substance from the water-absorbing resin layer, and as long as it is 30 parts by mass or less, it is possible to prevent precipitation of the excessive curing agent from the water-absorbing resin layer. Note that the content of an amine-based curing agent such as the polyamine-based compound, dicyandiamides, or organic acid dihydrazides is preferably 0.5 part by mass or less relative to 100 parts by mass of the resin component, and it is more preferable that the amine-based curing agent is not substantially contained. When the content of the amine-based curing agent is 0.5 part by mass or less relative to 100 parts by mass of the resin component, the water-absorbing resin layer in which yellowing is greatly reduced can be obtained.

### <Filler>

The undercoat composition may contain the filler. When the undercoat composition contains the filler, it is possible to increase mechanical strength and heat resistance of the water-absorbing resin layer and there is a tendency to allow a reduction in curing shrinkage of the resin component. As the filler, an inorganic filler and an organic filler can be cited, and the inorganic filler is preferable. As the inorganic filler, there can be cited silica, alumma, titania, zirconia, ITO (indium tin oxide), or the like, and silica or ITO is preferable. When the filler is silica, a water absorbing property tends to be given to the water-absorbing resin layer. Further, because ITO has infrared absorbency, heat ray absorbency is given to the water-absorbing resin layer and an antifogging effect owing to heat ray absorption can also be promising.

An average particle diameter of the filler is preferably 0.01 to 0.3 µm and more preferably 0.1 to 0.1 µm. When the resin component is the epoxy resin, a content of the filler is preferably 1 to 20 parts by mass and more preferably 1 to 10 parts by mass relative to total 100 parts by mass of the resin component and the curing catalyst. Relative to total 100 parts by mass of the resin component and the curing catalyst, when the content of the filler is 1 part by mass or more, there is a tendency to improve a reduction effect of the curing shrinkage of the resin, and when it is 20 parts by mass or less, space for absorbing water in the water-absorbing resin layer can be secured sufficiently and there is a tendency to improve the antifogging property. In this description, the average particle diameter is a volume-based median diameter when it is measured using a laser diffraction/scattering particle diameter distribution apparatus.

### <Leveling agent>

The undercoat composition may contain the leveling agent. When the undercoat composition contains the leveling agent, a thickness of the undercoat composition applied on the substrate tends to become even, so that there is a tendency to suppress perspective distortion of the antifogging article. As the leveling agent, a silicone-based leveling agent, a fluorine-based leveling agent, and so on can be cited, and the silicone-based leveling agent is preferable. As the silicone-based leveling agent, there can be cited amino-modified silicone, carbonyl-modified silicone, epoxy-modified silicone, polyether-modified silicone, alkoxy-modified silicone, and so on.

A content of the leveling agent is preferably 0.02 to 1 part by mass, more preferably 0.02 to 0.5 part by mass, and particularly preferably 0.02 to 0.3 part by mass relative to total 100 parts by mass of the resin component and the curing catalyst. Relative to total 100 parts by mass of the resin component and the curing catalyst, when the content of the leveling agent is 0.02 part by mass or more, the later-described thickness of the undercoat composition tends to become more even, and when it is 1 part by mass or less, there is a tendency to suppress occurrence of cloudiness of the water-absorbing resin layer.

### <Surfactant>

The undercoat composition may contain the surfactant. When the undercoat composition contains the surfactant, the thickness of the undercoat composition applied on the substrate tends to become even, so that there is a tendency to suppress the perspective distortion of the antifogging article. The surfactant is not particularly limited, and there can be cited a nonionic surfactant, a cationic surfactant, a betaine-based surfactant, and an anionic surfactant. When the surfactant is a surfactant having an alkyleneoxy chain such as an ethyleneoxy chain or a propyleneoxy chain, a hydrophilic property can be given to the undercoat composition and there is a tendency to improve the antifogging property of the antifogging article more, which is therefore preferable.

A content of the surfactant is preferably 0.02 to 1 part by mass, more preferably 0.02 to 0.5 part by mass, and particularly preferably 0.02 to 0.3 part by mass relative to total 100 parts by mass of the resin component and the curing catalyst. Relative to total 100 parts by mass of the resin component and the curing catalyst, when the content of the surfactant is 0.02 part by mass or more, the later-described thickness of the undercoat composition layer tends to become more even, and when it is 1 part by mass or less, there is a tendency to suppress the occurrence of the cloudiness of the water-absorbing resin layer.

### <Film thickness>

A thickness of the water-absorbing resin layer is preferably 5 to 50 µm and more preferably 10 to 30 µm. When the thickness of the water-absorbing resin layer is 5 µm or more, there is a tendency to sufficiently express the antifogging property to be required, and when it is 50 µm or less, peel resistance to the substrate tends to be sufficiently exhibited.

### (Overcoat layer)

The overcoat layer contains the hydrolyzed condensate of the alkoxysilane compound and the silica particles, a film thickness thereof is 20 to 350 nm, and the overcoat layer is formed from the overcoat composition containing 90 to 45 parts by mass of the alkoxysilane compound and 10 to 55 parts by mass of the silica particles relative to total 100 parts by mass of the alkoxysilane compound and the silica particles. The overcoat layer has a high water vapor transmission rate, thereby easily moving water vapor which adheres to the overcoat layer to the water-absorbing resin layer and allowing enhancing of the abrasion resistance as well. Accordingly, by the antifogging article having the overcoat layer, it becomes possible that the excellent antifogging property and abrasion resistance are compatible with each other.

### <Hydrolyzed condensate of alkoxysilane compound>

The hydrolyzed condensate of the alkoxysilane compound is the one in which two or more molecules of the later-described alkoxysilane compound are condensed after hydrolysis. The hydrolyzed condensate of the alkoxysilane compound may be an independent hydrolyzed condensate of one kind of alkoxysilane or may be a hydrolyzed condensate of two or more kinds of alkoxysilanes. Further, the hydrolyzed condensate of the alkoxysilane compound may hydrolyze and condense with a silanol group of the later-described silica particle.

The alkoxysilane compound is a compound having 1 to 4 alkoxy groups which bond to a silicon atom in one molecule.

As the alkoxysilane compound, a compound represented by the following general formula (I) can be cited.

(R¹O)ₚSiR²₍₄₋ₚ₎ (I)

In the formula (I), each R¹ independently represents an alkyl group having 1 to 4 carbon atoms, each R² independently represents an alkyl group having 1 to 10 carbon atoms, which may have a substituent, and p represents the number of 1 to 4. When R¹ or R² exists in a plural state, they may be the same or different from each other.

R¹ is the alkyl group having 1 to 4 carbon atoms, there can be cited a methyl group, an ethyl group, a propyl group, an isopropyl group, a butyl group, an isobutyl group, and a t-butyl group, and the methyl group and the ethyl group are preferable. In R², the alkyl group having 1 to 10 carbon atoms is liner or branched, and there can be cited a methyl group, an ethyl group, a propyl group, an isopropyl group, a butyl group, an isobutyl group, a t-butyl group, a hexyl group, a decyl group, and the like. R² is preferably the alkyl group having 1 to 6 carbon atoms. In R², the substituent is not particularly limited, and there can be cited an epoxy group, a glycidoxy group, a methacryloyloxy group, an acryloyloxy group, an isocyanato group, a hydroxy group, an amino group, a phenylamino group, an alkylamino group, an aminoalkylamino group, an ureido group, a mercapto group, an acid anhydride group, and the like. When the resin component is the epoxy resin, the isocyanato group, the acid anhydride group, the epoxy group, and the glycidoxy group are preferable as the substituent. Note that in R², "alkyl group having 1 to 10 carbon atoms" means that the number of carbon atoms of the alkyl group except the substituent is 1 to 10.

p is preferably 1 to 3 and more preferably 3. When p is 3 or less, there is a tendency to improve the abrasion resistance of the antifogging article to be obtained compared with a compound in which p is 4 (namely, tetraalkoxysilane).

As the alkoxysilane compound, there can be cited a tetraalkoxysilane compound such as tetramethoxysilane or tetraethoxysilane having four alkoxy groups which bond to a silicon atom in one molecule; and an alkoxysilane compound such as 3-glycidoxypropyltrimethoxysilane, 3 -glycidoxypropyltriethoxysilane, 3 -glycidoxypropylmethyldiethoxysilane, 3 -methacryloxypropylmethyldimethoxysilane, 3 -methacryloxypropyltrimethoxysilane, 3 -acryloxypropyltrimethoxysilane, 3 -isocyanatopropyltrimethoxysilane, N-(2-aminoethyl)-3-aminopropylmethyldimethoxysilane, N-(2-aminoethyl)-3-aminopropyltrimethoxysilane, 3-aminopropyltrimethoxysilane, 3-aminopropylmethyldimethoxysilane, N-phenyl-3-amionpropyltrimethoxysilane, 3-ureidopropyltriethoxysilane, or 3-mercaptopropyltrimethoxysilane having two or three alkoxy groups which bond to a silicon atom in one molecule. The alkoxysilane compound having three alkoxy groups which bond to a silicon atom in one molecule is preferable among these, and 3-glycidoxypropyltrimethoxysilane and 3-glycidoxypropyltriethoxysilane are more preferable.

### <Silica particle>

An average particle diameter of the silica particles is not particularly limited and is preferably 10 to 100 nm, more preferably 10 to 50 nm, and particularly preferably 10 to 30 nm. When the average particle diameter of the silica particles is 10 nm or more, spaces which allows retention of water in the water-absorbing resin layer is easily secured sufficiently, so that there is a tendency to improve the antifogging property. Further, as long as the average particle diameter of the silica particle is 100 nm or less, it is shorter enough than a wavelength of light, and it is therefore possible to reduce haze more.

As the silica particle, there can be cited a silica particle containing IPA-ST, IPA-STL, IPA-STZL (any of them, 2-propanol dispersion silica sol manufactured by NISSAN CHEMICAL INDUSTRIES, LTD.), and the like. The silica particle may be independently one kind or a combination of two or more kinds.

### <Overcoat composition>

The overcoat layer is formed from the overcoat composition containing the alkoxysilane compound and the silica particles. The silica particle which is used for preparation of the overcoat composition is preferably colloidal silica. As the colloidal silica, organo silica sol such as IPA-ST, IPA-STL, or IPA-STZL which is dispersed in an organic solvent such as 2-propanol is preferable. In preparing the overcoat composition, it is preferable that the silica particles are mixed with other components including the alkoxysilane compound which the overcoat composition contain, in the form of organo silica sol.

In amounts of the alkoxysilane compound and the silica particles in the overcoat composition, it contains 90 to 45 parts by mass of the alkoxysilane compound and 10 to 55 parts by mass of the silica particles, it is preferable to contain 90 to 55 parts by mass of the alkoxysilane compound and 10 to 45 parts by mass of the silica particles, and it is more preferable to contain 85 to 65 parts by mass of the alkoxysilane compound and 15 to 35 parts by mass of the silica particles, relative to total 100 parts by mass of the alkoxysilane compound and the silica particles. When a content of the silica particles is more than 55 parts by mass relative to total 100 parts by mass of the alkoxysilane compound and the silica particles, it is considered that the water vapor transmission rate decreases and water vapor which adheres to a surface of the overcoat layer cannot reach the water-absorbing resin layer efficiently, and thereby the antifogging article having a practical antifogging property cannot be obtained. Further, when the content of the silica particles is less than 10 parts by mass relative to total 100 parts by mass of the alkoxysilane compound and the silica particles, the antifogging article having practical abrasion resistance cannot be obtained.

### <Water, Acid catalyst, Solvent>

The overcoat composition may contain water, an acid catalyst, and a solvent under a condition that the hydrolyzed condensate of the alkoxysilane compound can be obtained.

The overcoat composition may contain water. By the overcoat composition containing water, a hydrolysis and condensation reaction progresses. An amount of water is preferably 4 to 20 parts by mass and more preferably 7 to 16 parts by mass relative to 100 parts by mass of the alkoxysilane compound.

The overcoat composition may contain the acid catalyst. By the overcoat composition containing the acid catalyst, it becomes possible to regulate a reaction rate of hydrolysis and condensation. As the acid catalyst, hydrochloric acid, nitric acid, sulfuric acid, and the like can be cited. An amount of the acid catalyst is preferably 0.1 to 5.0 parts by mass and more preferably 0.2 to 3.5 parts by mass relative to 100 parts by mass of the alkoxysilane compound.

The overcoat composition may contain the solvent. The solvent can be the same as the solvent of the above-described undercoat composition, also including a preferable one. An amount of the solvent is preferably 1 to 200 parts by mass, more preferably 5 to 180 parts by mass, and particularly preferable 5 to 50 parts by mass relative to 100 parts by mass of the alkoxysilane compound.

### <Further components>

The overcoat composition may contain further components in a range where the effect of the present invention is exhibited. As such components, there can be cited the surfactant, the water-soluble resin, the water-insoluble resin, and the UV absorbent. Note that the overcoat layer may contain the above-described water-soluble resin and water-insoluble resin each at a ratio of 10 parts by mass or less relative to total 100 parts by mass of the alkoxysilane compound and the silica particles. When the overcoat layer contains the water-soluble resin and the water-insoluble resin, their contents are preferably each 1 part by mass or less relative to total 100 parts by mass of the alkoxysilane compound and the silica particles, and it is particularly preferable that each of them is not substantially contained.

### <Film thickness>

A film thickness of the overcoat layer is 20 to 350 nm, preferably 30 to 300 nm, and more preferably 50 to 300 nm. When the film thickness of the overcoat layer is less than 20 nm, the abrasion resistance of the antifogging article is inferior, and when it is more than 350 nm, the antifogging property of the antifogging article is inferior.

### <Water vapor transmission rate>

The water vapor transmission rate of the overcoat layer is not particularly limited and is preferably 75 to 99.8%, more preferably 80 to 99.8%, and particularly preferably 85 to 99.8%. When the water vapor transmission rate is 75% or more, water vapor which adheres to the surface of the overcoat layer easily reaches the water-absorbing resin layer, so that there is a tendency to improve the antifogging property of the antifogging article. When the water vapor transmission rate is 99.8% or less, it is possible that the antifogging property and the abrasion resistance are compatible with each other in the antifogging article. The water vapor transmission rate is found by JIS K7129.

### <Abrasion resistance>

The abrasion resistance of the antifogging article can be examined by measuring the haze (haze value) before and after performing an abrasion test in which a wear ring is brought in contact with the surface of the overcoat layer of the antifogging article, and rotated 1000 times while applying a load of 4.90 N thereto in conformity with JIS R3212 (vehicle-interior side), and by finding the change (haze value change) ΔH (%). The smaller the haze change is, the higher the abrasion resistance is. The haze change is preferably 15% or less, more preferably 10% or less, and particularly preferably 5% or less. When the haze change is more than 15%, the practical abrasion resistance cannot be expressed. Note that the haze can be measured using a haze meter.

### [Manufacturing method of antifogging article]

The antifogging article can be obtained by a manufacturing method including: forming a water-absorbing resin layer on a substrate; forming an overcoat composition layer by applying an overcoat composition containing, relative to total 100 parts by mass of an alkoxysilane compound and silica particles, 90 to 45 parts by mass of the alkoxysilane compound and 10 to 55 parts by mass of the silica particles on the water-absorbing resin layer; and forming an overcoat layer by heat-treating the overcoat composition layer.

### (Manufacturing method of water-absorbing resin layer)

The water-absorbing resin layer can be obtained by a manufacturing method including: applying a composition containing a water-soluble resin on the substrate; and forming the water-absorbing resin layer by curing the applied composition containing the water-soluble resin. The composition containing the water-soluble resin is not particularly limited as long as it is a composition whose cured product has the water absorbing property, and the above-described undercoat composition is preferable.

An applying method of the composition containing the water-soluble resin is not particularly limited. As the applying method, there can be cited a spin coating, a dip coating, a spray coating, a flow coating, a die coating, and the like, and the spin coating is preferable. It is preferable that the composition containing the water-soluble resin is applied on at least a part of a surface on the substrate and applied over the whole surface of at least one main surface of the substrate. A thickness of the composition which is applied and contains the water-soluble resin is not particularly limited as long as it is a thickness which becomes a thickness allowing a desired water-absorbing resin layer to be obtained.

An applied amount of the composition which is applied on the substrate and contains the water-soluble resin is preferably an amount which becomes the thickness of the above-described water-absorbing resin layer. Specifically, the applied amount is preferably 1.6 to 1,600 g/m² and more preferably 8.0 to 800 g/m² as a solid content.

Curing of the composition containing the water-soluble resin is performed by heat treatment, for example. The heat treatment can be performed by an arbitrary heating device such as an electric furnace, a gas furnace, or an infrared heating furnace which is set to a predetermined temperature. A heat treatment temperature is preferably 70 to 300°C, more preferably 80 to 280°C, and particularly preferably 100 to 250°C. When the heat treatment temperature is 70°C or more, a decrease in adhesion strength due to a heating deficiency does not occur, and when it is 300°C or less, there is a tendency to suppress discoloration of the resin due to oxidation or the like. Heat treatment time is different depending on the heat treatment temperature, and the heat treatment for 1 to 180 minutes is preferable, the heat treatment for 5 to 120 minutes is more preferable, and the heat treatment for 10 to 60 minutes is particularly preferable. When the heat treatment time is one minute or more, the decrease in the adhesion strength due to the heating deficiency does not occur, and when it is 180 minutes or less, there is a tendency to suppress the discoloration.

### (Manufacturing method of overcoat layer)

The overcoat layer can be obtained by a manufacturing method including: forming an overcoat composition layer by applying the overcoat composition containing, relative to total 100 parts by mass of an alkoxysilane compound and silica particles, 90 to 45 parts by mass of the alkoxysilane compound and 10 to 55 parts by mass of the silica particles on the water-absorbing resin layer stacked on the substrate; and forming the overcoat layer by heat-treating the overcoat composition layer. By heat-treating the overcoat layer, the alkoxysilane compound hydrolyzes and condenses, so that a hydrolyzed condensate of the alkoxysilane compound can be obtained. Note that when the alkoxysilane compound hydrolyzes and condenses, at least a part of the hydrolyzed condensates bonds to the silica particle by polycondensation with a silanol group existing in the silica particle in some cases.

The overcoat composition is as described above, including preferable ones. As an applying method of the overcoat composition, the method described above in the manufacturing method of the water-absorbing resin layer can be cited, also including preferable ones. The overcoat composition is applied on at least a part of a surface of the water-absorbing resin layer formed on the substrate and preferably applied over the whole surface of the surface of the water-absorbing resin layer formed on the substrate.

As a thickness of the overcoat composition layer, such a thickness as becomes the above-described thickness of the overcoat layer can be cited, including preferable ones. Note that the thickness of the overcoat composition layer can be regulated corresponding to a thickness of the overcoat layer after the heat treatment. An applied amount of the overcoat composition is an amount by which the thickness of the above-described overcoat composition layer can be obtained, and specifically the applied amount is preferably 1.6 to 1,600 g/m² and more preferably 8.0 to 800 g/m² as a solid content.

Heat treatment of the overcoat composition layer can be performed by the arbitrary heating device such as the electric furnace, the gas furnace, or the infrared heating furnace which is set to a predetermined temperature. A heat treatment temperature is not particularly limited and is preferably 80 to 300°C and more preferably 80 to 200°C. When the heat treatment temperature is 80°C or more, the hydrolysis and condensation reaction in the alkoxysilane compound progresses and there is a tendency to improve the abrasion resistance of the antifogging article more, and when it is 300°C or less, there is a tendency to suppress formation of the discoloration in the antifogging article. Heat treatment time can be appropriately set corresponding to the heat treatment temperature and is preferably 1 to 180 minutes and more preferably 5 to 120 minutes. When the heat treatment time is one minute or more, the hydrolysis and condensation reaction in the alkoxysilane compound progresses and there is a tendency to improve the abrasion resistance more, and when it is 180 minutes or less, there is a tendency to suppress the formation of the discoloration.

### [Application of antifogging article]

As application of the antifogging article, there can be cited a window glass for transportation equipment (automobile, railway vehicle, boat, aircraft, or the like), a refrigerated display case, a dressing table mirror, a bathroom mirror, an optical apparatus, or the like. The present inventors have found that in particular, when a conventional antifogging article is used for a portion such as the window glass for an automobile door which undergoes lifting and lowering operation frequently, some antifogging articles greatly lack the abrasion resistance. When the antifogging article of the present invention is used for the window glass for the automobile door, the antifogging article has excellent abrasion resistance capable of resisting even repeated friction with a glass run rubber.

### EXAMPLE

Hereinafter, the present invention will be further described by citing examples, but the present invention is not limited to these examples. Note that Examples 1 to 19 described below are examples and Examples 20 to 25 described below are comparative examples.

Abbreviations and physical properties of compounds used in the examples and the comparative examples are summarized below.

### (1) Epoxy resin

EX1610: Denacol EX-1610 (trade name, manufactured by Nagase ChemteX Corporation, aliphatic polyglycidyl ether, weight-average molecular weight (Mw): 1130, average number of epoxy groups: 6.6 groups/molecule, water-soluble rate: 100%)

EP4100: ADEKA RESIN EP4100 (trade name, manufactured by ADEKA CORPORATION, bisphenol F diglycidyl ether, weight-average molecular weight (Mw): 320, average number of epoxy groups: about 2 groups/molecule, water-soluble rate = insoluble ("insoluble" indicates that water-soluble rate is less than 20%))

### (2) Curing catalyst

Al(acac)₃: tris(2,4-pentanedionato)aluminum(III) (manufactured by KANTO CHEMICAL CO., INC.)

### (3) Alkoxysilane compound

GPTMS: 3-glycidoxypropyltrimethoxysilane (manufactured by JNC CORPORATION: Sila-Ace 501)
TEOS: tetraethoxysilane (manufactured by Tokyo Chemical Industries)

### (4) Silica particle

IPA-ST: (manufactured by NISSAN CHEMICAL INDUSTRIES, LTD.: SiO₂ particle; 30 mass%, particle diameter: 10 to 20 nm)
IPA-STL: (manufactured by NISSAN CHEMICAL INDUSTRIES, LTD.: SiO₂ particle; 30 mass%, particle diameter: 40 to 50 nm)

IPA-STZL: (manufactured by NISSAN CHEMICAL INDUSTRIES, LTD.: SiO₂ particle; 30 mass%, particle diameter: 70 to 100 nm)

### (5) Solvent

SOLMIX AP-1: (manufactured by JAPAN ALCOHOL TRADING COMPANY LIMITED, mixed solvent of ethanol: 2-propanol: methanol = 85.5: 13.4: 1.1 (mass ratio))

Evaluation of an antifogging article in each example was performed as follows. Note that "surface of antifogging film" in the following evaluation is a surface of an overcoat layer in each example except Example 20 and a surface of a water-absorbing resin layer in Example 20.

### [Measurement of film thickness]

A cross-sectional image of the antifogging article was taken with a scanning electron microscope (manufactured by Hitachi, Ltd., S4300), and film thicknesses of the water-absorbing resin layer and the overcoat layer were measured.

### [Evaluation of antifogging property]

The surface of the antifogging film of the antifogging article left under an environment of 20°C and a relative humidity of 50% for 1 hour was held up (distance of 8.5 cm) above a hot water bath of 35°C, and antifogging time (second) until fogging is perceived by visual observation was measured. The fogging occurred in 1 to 2 seconds on a normal soda lime glass which is not subjected to an antifogging process. An antifogging property to be required is different depending on application. In the examples, practically, the antifogging property is preferably 40 seconds or more, more preferably 80 seconds or more, and particularly preferably 100 seconds or more.

### [Measurement of haze]

A haze (%) (presented as "Haze" in the later-described Table 2.) of the antifogging article was measured using a haze meter (haze-gard plus, manufactured by Gardner Laboratory, Inc.) in conformity to a standard of JIS K7361.

### [Evaluation of abrasion resistance]

Evaluation was performed in conformity to JIS R3212 (vehicle-interior side). In a 5130 type abrasion tester of Taber Industries, a wear ring CS-10F was used. The haze (%) was measured in a similar manner to the above-described one after performing an abrasion test in which the wear ring was brought in contact with the surface of the antifogging film of the antifogging article, and rotated 1,000 times while applying a load of 4.90 N thereto. Abrasion resistance was evaluated by subtracting a haze before the abrasion test from the haze after the abrasion test and finding a haze change ΔH (%).

### [Water vapor transmission rate]

A water vapor transmission rate of the overcoat layer was measured using a water vapor transmission rate measuring device PERMATRAN-W (manufactured by MOCON Inc.) in conformity to a standard of JIS K7129. The measurement was performed with a kapton film with an overcoat film in which the same overcoat layer as one produced in each example below was formed on the kapton film (TYPE: 100 H 25 µm) being a test piece. The water vapor transmission rate (%) was found from (a water vapor transmission rate of the kapton film with the overcoat film) / (the water vapor transmission rate of the kapton film) × 100.

### <1> Preparation of undercoat composition

### [Sol-gel hydrolysis composition]

In a glass container in which a stirrer and a thermometer were set, 36.7 g of SOLMIX AP-1, 39.3 g of 3-glycidoxypropyltrimethoxysilane, and 24.0 g of 0.1 mol/L nitric acid (manufactured by JUNSEI CHEMICAL CO., LTD.) were put and stirred at 25°C for 1 hour to obtain a sol-gel hydrolysis composition (A) which is a partially hydrolyzed condensate of an alkoxysilane compound.

### [Curing catalyst dilution]

In a glass container in which a stirrer and a thermometer were set, 3.0 g of Al(acac)₃ and 97.0 g of methanol (JUNSEI CHEMICAL; the highest quality) were put and stirred at 25°C and for 10 minutes to obtain a curing catalyst dilution (B).

### [Undercoat composition]

In a glass container in which a stirrer and a thermometer were set, 10.1 g of SOLMIX AP-1, 31.1 g of EX1610, 7.8 g of EP4100, 11.0 g of the sol-gel hydrolysis composition (A), and 40.0 g of the curing catalyst dilution (B) were put and stirred at 25°C for 30 minutes to obtain an undercoat composition (C).

### <2> Preparation of overcoat composition

### [Manufacturing example A1]

In a glass container in which a stirrer and a thermometer were set, 18.3 g of SOLMIX AP-1, 38.8 g of tetraethoxysilane, 16.0 g of IPA-ST, and 26.8 g of 0.1 mol/L nitric acid were put and stirred at 25°C for 60 minutes to obtain an overcoat composition (D1).

### [Manufacturing example A2]

In a glass container in which a stirrer and a thermometer were set, 26.4 g of SOLMIX AP-1, 27.7 g of tetraethoxysilane, 26.7 g of IPA-ST, and 19.2 g of 0.1 mol/L nitric acid were put and stirred at 25°C for 60 minutes to obtain an overcoat composition (D2).

### [Manufacturing example A3]

In a glass container in which a stirrer and a thermometer were set, 34.5 g of SOLMIX AP-1, 16.6 g of tetraethoxysilane, 37.7 g of IPA-ST, and 11.5 g of 0.1 mol/L nitric acid were put and stirred at 25°C for 60 minutes to obtain an overcoat composition (D3).

### [Manufacturing example A4]

In a glass container in which a stirrer and a thermometer were set, 13.1 g of SOLMIX AP-1, 44.0 g of 3-glycidoxypropyltrimethoxysilane, 16.0 g of IPA-ST, and 26.8 g of 0.1 mol/L nitric acid were put and stirred at 25°C for 60 minutes to obtain an overcoat composition (D4).

### [Manufacturing example A5]

In a glass container in which a stirrer and a thermometer were set, 22.7 g of SOLMIX AP-1, 31.5 g of 3-glycidoxypropyltrimethoxysilane, 26.7 g of IPA-ST, and 19.2 g of 0.1 mol/L nitric acid were put and stirred at 25°C for 60 minutes to obtain an overcoat composition (D5).

### [Manufacturing example A6]

In a glass container in which a stirrer and a thermometer were set, 32.3 g of SOLMIX AP-1, 18.9 g of 3-glycidoxypropyltrimethoxysilane, 37.3 g of IPA-ST, and 11.5 g of 0.1 mol/L nitric acid were put and stirred at 25°C for 60 minutes to obtain an overcoat composition (D6).

### [Manufacturing example A7]

In a glass container in which a stirrer and a thermometer were set, 22.7 g of SOLMIX AP-1, 31.5 g of 3-glycidoxypropyltrimethoxysilane, 26.7 g of IPA-STL, and 19.2 g of 0.1 mol/L nitric acid were put and stirred at 25°C for 60 minutes to obtain an overcoat composition (D7).

### [Manufacturing example A8]

In a glass container in which a stirrer and a thermometer were set, 22.7 g of SOLMIX AP-1, 31.5 g of 3-glycidoxypropyltrimethoxysilane, 26.7 g of IPA-STZL, and 19.2 g of 0.1 mol/L nitric acid were put and stirred at 25°C for 60 minutes to obtain an overcoat composition (D8).

### [Manufacturing example A9]

In a glass container in which a stirrer and a thermometer were set, 37.1 g of SOLMIX AP-1, 12.6 g of 3-glycidoxypropyltrimethoxysilane, 42.7 g of IPA-ST, and 7.7 g of 0.1 mol/L nitric acid were put and stirred at 25°C for 60 minutes to obtain an overcoat composition (D9).

### [Manufacturing example A10]

In a glass container in which a stirrer and a thermometer were set, 6.2 g of SOLMIX AP-1, 55.5 g of tetraethoxysilane, and 38.3 g of 0.1 mol/ L nitric acid were put and stirred at 25°C for 60 minutes to obtain an overcoat composition (D10).

### [Manufacturing example A11]

In a glass container in which a stirrer and a thermometer were set, 49.4 g of SOLMIX AP-1, 31.5 g of 3-glycidoxypropyltrimethoxysilane, and 19.2 g of 0.1 mol/L nitric acid were put and stirred at 25°C for 60 minutes to obtain an overcoat composition (D11).

### [Manufacturing example A12]

In a glass container in which a stirrer and a thermometer were set, 41.9 g of SOLMIX AP-1, 6.3 g of 3-glycidoxypropyltrimethoxysilane, 48.0 g of IPA-ST, and 3.8 g of 0.1 mol/L nitric acid were put and stirred at 25°C for 60 minutes to obtain an overcoat composition (D12).

### <3> Manufacture and evaluation of antifogging article

An antifogging film composed of two layers of a water-absorbing resin layer and an overcoat layer was formed on each kind of a substrate as follows using each of the compositions obtained in the above-described manufacturing examples, and evaluation was performed by the above-described evaluation methods.

### [Example 1]

A dried clean soda lime glass substrate (water contact angle 3°, 100 mm × 100 mm × 3.5 mm thickness) whose surface was polished and cleaned with cerium oxide was used as a substrate, and a water-absorbing resin layer was formed by applying the undercoat composition (C) to a surface of the glass substrate with a spin coat (manufactured by MIKASA CO. LTD., 50 rpm, 30 seconds) and holding it at 180°C in an electric furnace for 30 minutes. Next, an overcoat layer was formed by applying the overcoat composition (D1) to a surface of the formed water-absorbing resin layer with the spin coat (manufactured by MIKASA CO. LTD., 50rpm, 30 seconds) and holding it at 180° in the electric furnace for 10 minutes to obtain an antifogging article having an antifogging film composed of the two layers. Evaluation was performed regarding the obtained antifogging article.

### [Example 2]

An antifogging article was obtained in a similar manner to Example 1 except changing to the overcoat composition (D2). Evaluation was performed regarding the obtained antifogging article.

### [Example 3]

An antifogging article was obtained in the similar manner to Example 1 except changing to the overcoat composition (D3). Evaluation was performed regarding the obtained antifogging article.

### [Example 4]

An antifogging article was obtained in the similar manner to Example 1 except changing to the overcoat composition (D4). Evaluation was performed regarding the obtained antifogging article.

### [Example 5]

An antifogging article was obtained in a similar manner to Example 4 except changing a film thickness of an overcoat layer. Evaluation was performed regarding the obtained antifogging article.

### [Example 6]

An antifogging article was obtained in the similar manner to Example 4 except changing the film thickness of the overcoat layer. Evaluation was performed regarding the obtained antifogging article.

### [Example 7]

An antifogging article was obtained in the similar manner to Example 1 except changing to the overcoat composition (D5). Evaluation was performed regarding the obtained antifogging article.

### [Example 8]

An antifogging article was obtained in a similar manner to Example 7 except changing a film thickness of an overcoat layer. Evaluation was performed regarding the obtained antifogging article.

### [Example 9]

An antifogging article was obtained in the similar manner to Example 7 except changing the film thickness of the overcoat layer. Evaluation was performed regarding the obtained antifogging article.

### [Example 10]

An antifogging article was obtained in the similar manner to Example 1 except changing to the overcoat composition (D6). Evaluation was performed regarding the obtained antifogging article.

### [Example 11]

An antifogging article was obtained in a similar manner to Example 10 except changing a film thickness of an overcoat layer. Evaluation was performed regarding the obtained antifogging article.

### [Example 12]

An antifogging article was obtained in the similar manner to Example 10 except changing the film thickness of the overcoat layer. Evaluation was performed regarding the obtained antifogging article.

### [Example 13]

An antifogging article was obtained in the similar manner to Example 1 except changing to the overcoat composition (D7). Evaluation was performed regarding the obtained antifogging article.

### [Example 14]

An antifogging article was obtained in a similar manner to Example 13 except changing a film thickness of an overcoat layer. Evaluation was performed regarding the obtained antifogging article.

### [Example 15]

An antifogging article was obtained in the similar manner to Example 13 except changing the film thickness of the overcoat layer. Evaluation was performed regarding the obtained antifogging article.

### [Example 16]

An antifogging article was obtained in the similar manner to Example 1 except changing to the overcoat composition (D8). Evaluation was performed regarding the obtained antifogging article.

### [Example 17]

An antifogging article was obtained in a similar manner to Example 16 except changing a film thickness of an overcoat layer. Evaluation was performed regarding the obtained antifogging article.

### [Example 18]

An antifogging article was obtained in the similar manner to Example 16 except changing the film thickness of the overcoat layer. Evaluation was performed regarding the obtained antifogging article.

### [Example 19]

An antifogging article was obtained in the similar manner to Example 1 except changing to the overcoat composition (D9). Evaluation was performed regarding the obtained antifogging article.

### [Example 20]

A dried clean soda lime glass substrate (water contact angle 3°, 100 mm × 100 mm × 3.5 mm thickness) whose surface was polished and cleaned with cerium oxide was used as a substrate, and a water-absorbing resin layer was formed by applying the undercoat composition (C) to a surface of the glass substrate with the spin coat (MIKASA CO. LTD., 50 rpm, 30 seconds) and holding it at 180°C in the electric furnace for 30 minutes to obtain an antifogging article having an antifogging film composed of one layer of the water-absorbing resin layer. Evaluation was performed regarding the obtained antifogging article.

### [Example 21]

An antifogging article was obtained in the similar manner to Example 1 except changing to the overcoat composition (D10). Evaluation was performed regarding the obtained antifogging article.

### [Example 22]

An antifogging article was obtained in the similar manner to Example 1 except changing to the overcoat composition (D11). Evaluation was performed regarding the obtained antifogging article.

### [Example 23]

An antifogging article was obtained in the similar manner to Example 7 except changing the film thickness of the overcoat layer. Evaluation was performed regarding the obtained antifogging article.

### [Example 24]

An antifogging article was obtained in the similar manner to Example 7 except changing the film thickness of the overcoat layer. Evaluation was performed regarding the obtained antifogging article

### [Example 25]

An antifogging article was obtained in the similar manner to Example 1 except changing to the overcoat composition (D12). Evaluation was performed regarding the obtained antifogging article.

Table 1 presents the kind of the overcoat composition, parts by mass of the alkoxysilane compound and parts by mass of the silica particles (in Table 1, presented as "solid content composition of overcoat composition") relative to total 100 parts by mass of the alkoxysilane compound and the silica particles in the overcoat composition, which were used in each of the above-described examples, and a film thickness of each layer. Note that in Table 1, the kind of dispersion liquid is mentioned as the kind of silica particle but the part by mass is parts by mass of the silica particles themselves. Further, the evaluation results of the antifogging articles obtained in the examples are summarized in Table 2. Note, in Table 1 and Table 2, Ex. No. means Example number.

**[Table 1]**

| Ex. No. | Overcoat composition (kind) | Solid content composition of overcoat composition (part by mass) | | | | | Film thickness of each layer | |
|---|---|---|---|---|---|---|---|---|
| | | Alkoxysilane compound | | Silica particles | | | Water-absorbing resin layer (µm) | Overcoat layer (nm) |
| | | TEOS | GPTMS | IPA-ST | IPA-STL | IPA-STZL | | |
| 1 | D1 | 89 | | 11 | | | 19.7 | 50 |
| 2 | D2 | 78 | | 22 | | | 20.4 | 42 |
| 3 | D3 | 60 | | 40 | | | 19.7 | 31 |
| 4 | D4 | | 90 | 10 | | | 19.2 | 100 |
| 5 | D4 | | 90 | 10 | | | 19.0 | 200 |
| 6 | D4 | | 90 | 10 | | | 18.1 | 300 |
| 7 | D5 | | 80 | 20 | | | 18.4 | 100 |
| 8 | D5 | | 80 | 20 | | | 18.5 | 200 |
| 9 | D5 | | 80 | 20 | | | 18.2 | 300 |
| 10 | D6 | | 63 | 37 | | | 19.1 | 107 |
| 11 | D6 | | 63 | 37 | | | 17.7 | 178 |
| 12 | D6 | | 63 | 37 | | | 18.7 | 225 |
| 13 | D7 | | 80 | | 20 | | 19.0 | 134 |
| 14 | D7 | | 80 | | 20 | | 19.1 | 159 |
| 15 | D7 | | 80 | | 20 | | 18.7 | 243 |
| 16 | D8 | | 80 | | | 20 | 19.2 | 75 |
| 17 | D8 | | 80 | | | 20 | 18.0 | 101 |
| 18 | D8 | | 80 | | | 20 | 18.9 | 148 |
| 19 | D9 | | 50 | 50 | | | 18.5 | 150 |
| 20 | not used | | | | | | 18.4 | 0 |
| 21 | D10 | 100 | | | | | 18.6 | 424 |
| 22 | D11 | | 100 | | | | 18.3 | 300 |
| 23 | D5 | | 80 | 20 | | | 18.9 | 18 |
| 24 | D5 | | 80 | 20 | | | 18.3 | 450 |
| 25 | D12 | | 30 | 70 | | | 18.8 | 150 |

**[Table 2]**

| Ex. No. | Antifogging property (second) | Haze (%) | Abrasion resistance ΔH (%) | Water vapor transmission rate (%) |
|---|---|---|---|---|
| 1 | 83 | 0.3 | 14.9 | 90.6 |
| 2 | 53 | 0.1 | 10.7 | 84.0 |
| 3 | 124 | 0.3 | 8.9 | 99.6 |
| 4 | 97 | 0.2 | 12.7 | 97.3 |
| 5 | 79 | 0.2 | 6.4 | 90.6 |
| 6 | 77 | 0.1 | 6.5 | 85.1 |
| 7 | 106 | 0.2 | 4.8 | 93.9 |
| 8 | 67 | 0.1 | 4.8 | 89.0 |
| 9 | 44 | 0.1 | 4.7 | 82.8 |
| 10 | 77 | 0.1 | 3.6 | 89.3 |
| 11 | 57 | 0.2 | 3.7 | 84.9 |
| 12 | 41 | 0.2 | 3.8 | 81.3 |
| 13 | 85 | 0.2 | 11.1 | 91.0 |
| 14 | 71 | 0.2 | 12.2 | 87.9 |
| 15 | 51 | 0.1 | 7.1 | 83.5 |
| 16 | 97 | 1.0 | 11.7 | 93.7 |
| 17 | 65 | 0.7 | 11.8 | 86.6 |
| 18 | 60 | 0.6 | 12.5 | 85.5 |
| 19 | 55 | 0.6 | 4.2 | 84.2 |
| 20 | 151 | 0.1 | 32.7 | 100.0 |
| 21 | 81 | 0.1 | 23.4 | 90.1 |
| 22 | 80 | 0.1 | 16.3 | 94.1 |
| 23 | 140 | 0.2 | 18.9 | 97.5 |
| 24 | 35 | 0.2 | 4.8 | 73.9 |
| 25 | 31 | 0.2 | 3.4 | 73.0 |

In Table 2, a water vapor transmission rate of Example 20 is a numeric value (100%) due to not having an overcoat layer. As presented by Table 2, it is found that the antifogging articles of Example 1 to Example 19 which are the examples are excellent in both the antifogging property and the abrasion resistance. On the other hand, the antifogging articles of, Example 20 in which the antifogging article does not have the overcoat layer, Example 21 and Example 22 in which the overcoat layers do not contain silica particles, and Example 23 in which the thickness of the overcoat layer is less than 20 nm, were not sufficient in the abrasion resistance. The antifogging article of Example 24 in which the thickness of the overcoat layer is more than 350 nm was not sufficient in the antifogging property. The antifogging article of Example 25 in which the overcoat composition was formed from the overcoat composition containing more than 55 parts by mass of the silica particles relative to total 100 parts by mass of the alkoxysilane compound and the silica particles was not sufficient in the antifogging property.

An antifogging article of the present invention is excellent in both an antifogging property and abrasion resistance compared with a conventional antifogging article. The antifogging article of the present invention can be used for a window glass for transportation equipment (automobile, railway vehicle, boat, aircraft, and the like), a refrigerated display case, a dressing table mirror, a bathroom mirror, an optical apparatus, and the like.

## Claims

1. An antifogging article comprising:
a substrate;
a water-absorbing resin layer disposed on the substrate; and
an overcoat layer disposed on the water-absorbing resin layer and comprising a hydrolyzed condensate of an alkoxysilane compound and silica particles,
wherein a film thickness of the overcoat layer measured using a scanning electron microscope is 20 to 350 nm and the overcoat layer is formed from an overcoat composition containing 90 to 45 parts by mass of the alkoxysilane compound and 10 to 55 parts by mass of the silica particles relative to total 100 parts by mass of the alkoxysilane compound and the silica particles.

2. The antifogging article according to claim 1,
wherein the alkoxysilane compound is a compound represented by the following general formula (I),
(R¹O)ₚSiR²₍₄₋ₚ₎ (I)
where each R¹ independently represents an alkyl group having 1 to 4 carbon atoms, each R² independently represents an alkyl group having 1 to 10 carbon atoms, which may have a substituent, and p represents the number of 1 to 4.

3. The antifogging article according to claim 1 or 2,
wherein an average particle diameter of the silica particle is 10 to 100 nm, wherein the particle diameter is a volume based median diameter measured using a laser diffraction/scattering particle diameter distribution apparatus.

4. The antifogging article according to any one of claims 1 to 3,
wherein a water vapor transmission rate of the overcoat layer measured in conformity with JIS K7129 is 75.0 to 99.8% and a haze value change of the antifogging article before and after performing an abrasion test of a load 4.90 N and 1,000 rotations with respect to a surface of the overcoat layer in conformity with JIS R3212 is 15% or less.

5. A manufacturing method of an antifogging article, the method comprising:
forming a water-absorbing resin layer on a substrate;
forming an overcoat composition layer by applying an overcoat composition containing, 90 to 45 parts by mass of an alkoxysilane compound and 10 to 55 parts by mass of silica particles relative to total 100 parts by mass of the alkoxysilane compound and the silica particles on the water-absorbing resin layer; and
forming an overcoat layer by heat-treating the overcoat composition layer.

## Patentansprüche

1. Antibeschlaggegenstand, umfassend:
ein Substrat;
eine Wasser absorbierende Harzschicht, angeordnet auf dem Substrat, und
eine Überzugsschicht, angeordnet auf der Wasser absorbierenden Harzschicht und ein hydrolysiertes Kondensat einer Alkoxysilanverbindung und Silicateilchen umfassend,
wobei eine Filmdicke der Überzugsschicht, gemessen unter Verwendung eines Rasterelektronenmikroskops, 20 bis 350 nm ist und die Überzugsschicht aus einer Überzugszusammensetzung gebildet ist, enthaltend 90 bis 45 Masse-Teile der Alkoxysilanverbindung und 10 bis 55 Masse-Teile der Silicateilchen relativ zu der Gesamtheit von 100 Masse-Teilen der Alkoxysilanverbindung und der Silicateilchen.

2. Antibeschlaggegenstand gemäß Anspruch 1, wobei die Alkoxysilanverbindung eine Verbindung ist, dargestellt durch die folgende allgemeine Formel (I),
(R¹O)ₚSiR²₍₄₋ₚ₎ (I)
wobei R¹ jeweils unabhängig voneinander eine Alkylgruppe mit 1 bis 4 Kohlenstoffatomen bedeutet, R² jeweils unabhängig voneinander eine Alkylgruppe mit 1 bis 10 Kohlenstoffatomen bedeutet, welche einen Substituent aufweisen können, und p eine ganze Zahl von 1 bis 4 darstellt.

3. Antibeschlaggegenstand gemäß Anspruch 1 oder 2, wobei ein durchschnittlicher Teilchendurchmesser der Silicateilchen 10 bis 100 nm ist, wobei der Teilchendurchmesser ein Mediandurchmesser auf Volumen-Basis, gemessen unter Verwendung einer Laserdiffraktion/Streuung-Teilchendurchmesserverteilungsvorrichtung, ist.

4. Antibeschlaggegenstand gemäß einem der Ansprüche 1 bis 3, wobei eine Wasserdampfdurchlässigkeitsrate der Überzugsschicht, gemessen im Einklang mit JIS K7129, 75,0 bis 99,8% beträgt und eine Trübungswertänderung des Antibeschlaggegenstands vor und nach Durchführen eines Abrasionstests bezüglich einer Last von 4,90 N und 1000 Umdrehungen bezüglich einer Oberfläche der Überzugsschicht im Einklang mit JIS R3212 15% oder weniger beträgt.

5. Herstellungsverfahren bezüglich eines Antibeschlaggegenstands, wobei das Verfahren umfaßt:
Bilden einer Wasser absorbierenden Harzschicht auf einem Substrat,
Bilden einer Überzugszusammensetzungsschicht durch Aufbringen einer Überzugszusammensetzung, enthaltend 90 bis 45 Masse-Teile einer Alkoxysilanverbindung und 10 bis 55 Masse-Teile Silicateilchen relativ zu einer Gesamtheit von 100 Masse-Teilen der Alkoxysilanverbindung und der Silicateilchen, auf die Wasser absorbierende Harzschicht, und
Bilden einer Überzugsschicht durch Wärmebehandeln der Überzugszusammensetzungsschicht.

## Revendications

1. Article antibuée comprenant :
un substrat ;
une couche de résine absorbant l'eau disposée sur le substrat ; et
une couche de recouvrement disposée sur la couche de résine absorbant l'eau et comprenant un condensat hydrolysé d'un composé alcoxysilane et des particules de silice,
dans lequel l'épaisseur de film de la couche de recouvrement, mesurée par utilisation d'un microscope électronique à balayage, est de 20 à 350 nm, et la couche de recouvrement est formée à partir d'une composition de recouvrement contenant 90 à 45 parties en masse du composé alcoxysilane et 10 à 55 parties en masse des particules de silice par rapport à un total de 100 parties en masse du composé alcoxysilane et des particules de silice.

2. Article antibuée selon la revendication 1, dans lequel le composé alcoxysilane est un composé représenté par la formule générale (I) suivante,
(R¹O)ₚSiR²₍₄₋ₚ₎ (I)
dans laquelle chaque R¹ représente indépendamment un groupe alkyle ayant 1 à 4 atomes de carbone, chaque R² représente indépendamment un groupe alkyle ayant 1 à 10 atomes de carbone, qui peut avoir un substituant, et p représente un nombre de 1 à 4.

3. Article antibuée selon la revendication 1 ou 2, dans lequel le diamètre moyen des particules de silice est de 10 à 100 nm, et dans lequel le diamètre des particules est un diamètre médian en volume mesuré par utilisation d'un appareil de distribution des diamètres de particules par diffraction/diffusion de laser.

4. Article antibuée selon l'une quelconque des revendications 1 à 3, dans lequel le taux de transmission de la vapeur d'eau de la couche de recouvrement, mesurée conformément à la norme JIS K7129, est de 75,0 à 99,8 %, et le changement de valeur de voile de l'article antibuée avant et après mise en œuvre d'un test d'abrasion avec une charge de 4,90 N et 1000 rotations par rapport à la surface de la couche de recouvrement, conformément à la norme JIS R3212, est de 15 % ou moins.

5. Procédé de fabrication d'un article antibuée, le procédé comprenant :
la formation d'une couche de résine absorbant l'eau sur un substrat ;
la formation d'une couche de composition de recouvrement par application d'une composition de recouvrement contenant 90 à 45 parties en masse du composé alcoxysilane et 10 à 55 parties en masse des particules de silice par rapport à un total de 100 parties en masse du composé alcoxysilane et des particules de silice sur la couche de résine absorbant l'eau ; et
la formation d'une couche de recouvrement par traitement à la chaleur de la couche de composition de recouvrement.
